Europäisches Patentamt

European Patent Office

Office européen des brevets

(19)

(11) Publication number: **0 130 994**
**B1**

(12) **EUROPEAN PATENT SPECIFICATION**

(45) Date of publication of patent specification: **14.09.88**

(51) Int. Cl.⁴: **B 01 D 13/01**

(21) Application number: **83903694.4**

(22) Date of filing: **17.10.83**

(86) International application number:
**PCT/US83/01628**

(87) International publication number:
**WO 84/02478 05.07.84 Gazette 84/16**

(54) **END CLOSURE FOR TUBULAR HOUSING.**

(30) Priority: **20.12.82 US 451111**

(43) Date of publication of application:
**16.01.85 Bulletin 85/03**

(45) Publication of the grant of the patent:
**14.09.88 Bulletin 88/37**

(84) Designated Contracting States:
**BE DE FR GB NL**

(56) References cited:
**EP-A-0 058 275**
**WO-A-80/02805**
**FR-A-2 267 138**
**FR-A-2 456 524**
**US-A-3 344 010**
**US-A-4 218 313**
**US-A-4 271 014**
**US-A-4 283 284**
**US-A-4 414 110**

**PATENTS ABSTRACTS OF JAPAN, vol. 7, no.
230 (M-249)(1375), October 12, 1983,
Idem.**

(73) Proprietor: **BAXTER TRAVENOL
LABORATORIES, INC.**
**One Baxter Parkway**
**Deerfield, IL 60015 (US)**

(72) Inventor: **TOBIASZ, Henry, E.**
**1214 East Campbell Avenue**
**Arlington Heights, IL 60004 (US)**

(74) Representative: **Klunker, Hans-Friedrich, Dr.
et al**
**Patentanwälte Klunker . Schmitt-Nilson . Hirsch**
**Winzererstrasse 106**
**D-8000 München 40 (DE)**

EP 0 130 994 B1

Courier Press, Leamington Spa, England.

## Description

The present invention relates to a hollow fiber separation device according to the precharacterizing part of claim 1.

Hollow fiber separation devices, for example for the processing of blood in dialysis or membrane plasmapheresis, are available comprising a bundle of appropriate hollow fibers for the intended purpose positioned in a tubular housing. Both of the above mentioned types of hollow fiber separation devices are commercially available from Travenol Laboratories, Inc. of Deerfield, Illinois, and many patents, for example U.S. Patent No. 4,283,284, show various different designs of such hollow fiber devices.

Additionally, ultrafiltration devices and filters may also be made using the known hollow fiber technology for separation devices.

Typically the tubular housing has been rigid in the hollow fiber separation devices of the prior art, with screw-on end caps placed on the ends of the housings (EP—A—0058275). Hollow fiber separation devices have been proposed in which the tubular housings are made by a blow molding or thermoforming process, and the end cap manifold members are applied to the ends of the tubular housing by preferably a heat sealing technique, for example ultrasonic sealing or spin welding, without the need for interlocking screw threads for retention as has been common in the prior art.

Since this represents a significant departure from the prior technology for hollow fiber separation devices, a new series of technological problems has arisen. Particularly, a problem arises in the fact that blow molding and thermoforming processes tend to be less accurate than some other molding processes. Thus blow molded tubular housings exhibit less dimensional uniformity, and individual housings from a production line can have greater dimensional variance in particularly the diameter and shape of their ends. Nevertheless, it remains very important for the end cap manifold members to be applied in a tight seal, despite the reduced dimensional uniformity typically found in blow molded or thermoformed items.

Also, blow molded and thermoformed tubular housings may have greater flexibility than the rigid, tubular housings typically used in the prior art for hollow fiber separation devices, which, of course, renders more complex the problem of providing a good end seal as an end cap manifold is applied.

A hollow fiber separation device of the type defined in the pre-characterizing part of claim 1 is disclosed in FR—A—2267138. The tubular housing may or may not be of thermoplastic material. The end cap manifolds consist of a thermosetting material. The specific bonding technique for attaching the end cap manifold to the ends of the tubular housing is not explained in this reference. However, due to the specific structure of the end cap manifold each having an axial flange dis-

posed on the outer surface of an end of the tubular housing one might learn that the bonding between the tubular housing and the end cap manifolds is achieved by way of an adhesive between the outer surface of the tubular housing and the inner surface of the axial flange.

FR—A—2456524 discloses a hollow fiber separation device in which the ends of a tubular housing made of a thermoplastic material are connected to end cap structures by way of heat welding. In this prior art device, thhe ends of the hollow fibers project a certain distance over the end faces of the tubular housing and are inclined versus the longitudinal axis of the tubular housing. The outer circumferential surface of the fiber bundle engages a conical inner surface of one part of the end cap structure. Another part of the end cap structure is engaged with the outer surface of the tubular housing and is fixed thereto by heat welding. However, this prior art structure is very complicated and there remains a hollow ring-shaped chamber between the annular contact surface of the fiber bundle and the cap structure and the contact surface between the tubular housing and the cap structure. Such hollow spaces are undesirable.

The problem underlying the present invention is to provide an improved hollow fiber separation device being particularly contemplated for use with blow molded or thermoform tubular housings and having a simple structure.

In accordance with the characterizing part of claim 1 this problem is solved by providing a structure in which each annular ends surface of the tubular housing is positioned in bonded abutting relationship with the annular face of an end cap manifold and wherein the tubular housing and the end cap manifold, each consisting of thermoplastic material, are bonded together by heat welding at the annular end surfaces of the tubular housing and the annular faces of the end cap manifolds.

US—A—3,344,010 discloses an end cap closure for a tubular container. The open end of the container comprises a radial flange. The outer peripheral surface of the end of the container is inclined with respect to the longitudinal axis of the container, and so is the inner surface of the cap member. The end cap member is fixed to the end of the tubular container by way of heat welding, i.e. the cap member is quickly rotated with respect to the container while the inclined surfaces of the two parts are contacting each other. However, such heat welding connection although known for many years had not been considered suitable in connection with hollow fiber separation devices. The reason for this might be the fact that the open ends of the hollow fibers lying in the vicinity of the ends of the tubular housing must be kept open when connecting the end cap manifolds to the ends of the tubular housing. When using heat welding techniques there is the risk that molten material flows into the open ends of the hollow fibers. Due to a specific range of angles between the annular face of the cap member and the longitudinal axis of the tubular housing such molten material is kept away from the ends of the hollow fibers.

The invention can make use of the fact that while one would normally not expect a good seal to be easily formable at the end of a semiflexible, blow molded or thermoformed tubular housing, a previously unforeseen advantage is obtained when one forms end-potted areas at the end of a housing containing a bundle of hollow fibers in accordance with previously known techniques. As such unexpected advantage, a rigidity is obtained which provides the unforeseen benefit of facilitating the sealing of an end cap to the end. Also, the particular structure of an end cap used permits the creation of a good seal even with a relatively wide dimensional variance from part to part.

The existence of the annular face imparts to the system a great tolerance of dimensional variance in both the end cap and the end of the tubular housing. Even if the tubular housing is of varied size or somewhat oval in shape, its entire periphery can come into firm contact with some point of the angled, internal, annular face, thus permitting the creation of a good annular seal between the end of the housing and the end cap.

The tubular housing may be made of substantially flexible thermoplastic material, with the end of the tubular housing being filled with potted plastic compound in a manner well known to hollow fiber separation device technology, to provide relative rigidity to the end of the housing to facilitate a heat seal. Preferably, the angle of the internal annular face to the axis of the tubular housing is 15° to 50°.

The tubular housing may define an outwardly extending flange at its end if desired, with the flange being in sealing engagement about its entire periphery with the internal annular face of the end cap.

Description of the Drawings

Figure 1 is a fragmentary longitudinal sectional view showing a hollow fiber dialyzer and one of its end caps prior to the joining thereof.

Figure 2 is a longitudinal sectional view of Figure 1 after joining of the hollow fiber dialyzer and end cap.

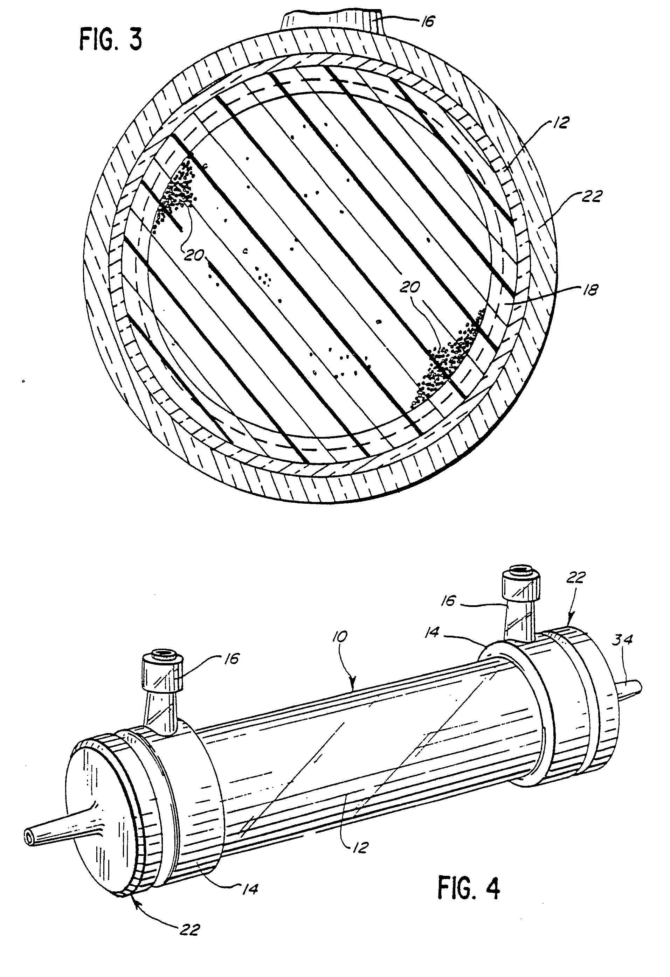

Figure 3 is a sectional view taken along line 3—3 of Figure 2.

Figure 4 is a perspective view of the hollow fiber dialyzer of the previous claims.

Description of Specific Embodiment

Referring to the drawings, hollow fiber dialyzer 10 is disclosed, which may be of generally conventional design except as otherwise disclosed. Alternatively, dialyzer 10 may be of a configuration in which the overall design of the dialyzer is conventional except that tubular housing 12 may be thermoformed or blow molded out of a relatively flexible, inexpensive material such as polypropylene, polyethylene, or glycol-modified polyethyleneterephthalate.

As is conventional, tubular housing 12 contains at each end an annular manifold portion 14 and a side port for dialyzate 16. At each end of the dialyzer, as also is conventional, a plug of potting compound 18 is provided through which the hollow fibers 20 pass, so that flowing blood or other fluid can pass through the bores of the hollow fibers 20 from end to end of housing 12.

End cap manifolds 22 are provided to seal the housing ends. Manifolds 22 and tubular housing 12 may preferably both be made of thermoplastic materials, particularly when it is desired to use a heat sealing technique to join them rather than a gluing technique or the like.

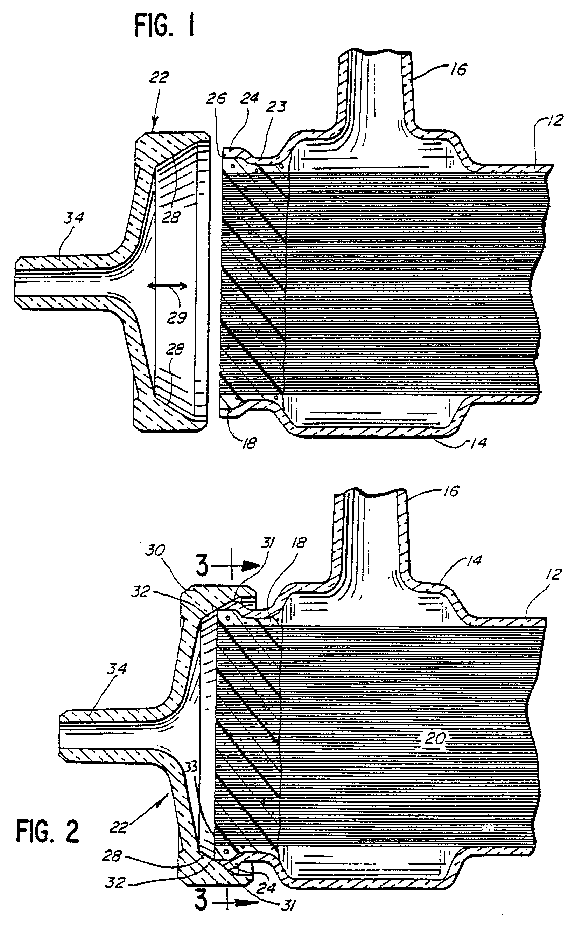

As shown in Figure 1, the initially separate housing 12 with its end plugs 18 of potting compound and end cap manifolds 22 may be provided, being placed in an ultrasonic sealing device, for example. For this purpose a Branson ultrasonic sealer may be used, or, if desired, a commercially available spinwelding apparatus.

It may also be desired to provide annular depression 23 and outwardly extending annular flange 24 to each end of tubular housing 12, to help retain each end plug 18, among other reasons. As previously stated, the dimensions of each end 26 of tubular housing may exhibit significant variability, deviating, for example, from the ideal dimension to which it is was intended to be molded by 20 to 30 thousandths of an inch or more.

Accordingly, in accordance with this invention, internal annular face 28 is provided to tubular housing 22, the specific angle of face 28 as shown being about 30° to the axis 29 of tubular housing 12 and manifold 22. Accordingly, internal annular face 28 receives annular end 26 (Fig. 1) of housing 12 with a snug fit at some point along face 28 irrespective of small dimensional deviations such as an out-of-round configuration or the like. Thus, as shown in Figure 2, a tight heat seal 30 can be formed between end 26 and internal annular face 28.

As a further advantage any "flash" 32 of molten plastic material which moves inwardly along face 28 is kept away from the ends 33 of hollow fibers 20 because of the acute angled relationship, i.e., no more than 70°, of face 28 to the axis of housing 12. Thus the flash material, which adheres to face 28, remains spaced from fiber ends 33 and does not block them. The "flash" material can also move outwardly along face 28 as at area 31.

Each end cap 22 typically carries at least one flow port 34 so that blood or other fluid may pass through port 34 into contact with the ends 33 of hollow fibers 20, passing through the bores of the hollow fibers to exit at their other ends, and out another port corresponding to port 34 of the end cap manifold on the other end of dialyzer 10, which may be of identical design to the one shown.

By this invention, a solid, firm, hermetic annular seal may be provided to a tubular housing or other tubular port, even when the tubular housing is fairly flexible in itself, by taking advantage of the presence of angled annular face 28, and typically also a plug 18 of potting compound or other plastic material, to provide a relatively rigid end to the tubular housing. Accordingly, improvements in reliability and reduction of cost are achievable through the use of this invention.

The above has been offered for illustrative purposes only, and is not intended to limit the scope of the claims of this application.

**Claims**

1. A hollow fiber separation device comprising
— a tubular housing (12) defining annular end surfaces (26) at each end,
— hollow fibers (20) extending from end to end of the housing (12),
— end seals (18) at the respective housing ends for sealing the hollow fibers (20) in the housing (12) and formed by filling the ends of the housing with potted plastic material compound to provide relative rigidity to the ends, the compound terminating in a flat face flush with the ends of the housing and open bores of the hollow fibers extending through the compound, and
— end cap manifolds (22) fitting over the ends of the housing (12) wherein
— the tubular housing is made of thermoplastic material and
— each end cap manifold (22) defines an internal, annular face (28) having an angle of essentially 5° to 70° to the central axis (29) of the tubular housing (12)
characterized in that
— both the tubular housing (12) and the end cap manifolds (22) are made of thermoplastic material
— each annular end surface (26) of the housing (12) is positioned in bonded abutting relationship with the annular face (28) of an end cap manifold (27), and
— the tubular housing (12) and the end cap manifolds (22) are bonded together by heat welding at said annular end surfaces (26) and annular faces (28).

2. The device of claim 1, in which an outwardly extending flange (24) is defined at the ends of said tubular housing (12), said flange (24) being in sealing engagement about its entire periphery with the annular face (28) of an end cap manifold (22).

3. The device of claim 1 or 2, characterized in that the angle defined by said annular face (28) and the central axis (29) of the tubular housing (12) is between 15° and 50°.

4. The device of any of claims 1 to 3, characterized in that the annular end surfaces (26) of the tubular housing (12) are free of inwardly projecting flanges.

**Patentansprüche**

1. Hohlfaser-Separiervorrichtung, umfassend:
— ein rohrförmiges Gehäuse (12) mit ringförmigen Stirnflächen (26) an jedem Ende,
— hohle Fasern (20), die sich von Ende zu Ende des Gehäuses (12) erstrecken,

— Endabdichtungen (18) an den jeweiligen Gehäuseenden zum Abdichtten der hohlen Fasern (20) in dem Gehäuse (12), gebildet durch Füllen der Gehäuseenden mit einer Kunststoff-Vergußmasse, um den Enden eine relative Steifigkeit zu verleihen, wobei die Vergußmasse mit einer Flachseite abschließt, die mit den Gehäuseenden bündig ist und wobei sich offene Durchgänge der hohlen Fasern durch die Vergußmasse hindurch erstrecken, und
— Endcappen-Sammelleitungen (22), die über die Enden des Gehäuses (12) gepaßt sind, wobei
— das rohrförmige Gehäuse aus thermoplastischem Material besteht und
— jede Endkappen-Sammelleitung (22) eine interne, ringförmige Fläche (28) definiert, die in Bezug auf die Mittelachse (29) des rohrförmigen Gehäuses (12) einen Winkel von etwa 5° bis 70° aufweist,
dadurch gekennzeichnet, daß
— sowohl das rohrförmige Gehäuse (12) als auch die Endkappen-Sammelleitungen (22) aus thermoplastischem Material bestehen,
— jede ringförmige Stirnfläche (26) des Gehäuses (12) sich in verbundener Anlage mit der ringförmigen Fläche (28) einer Endkappen-Sammelleitung (27) befindet, und
— das rohrförmige Gehäuse (12) und die Endkappen-Sammelleitungen (22) durch Wärmeverschweißung an den ringförmigen Stirnflächen (26) und den ringförmigen Flächen (28) miteinander verbunden sind.

2. Vorrichtung nach Anspruch 1, bei der an den Enden des rohrförmigen Gehäuses (12) ein sich nach außen erstreckender Flansch (24) gebildet ist, der sich über seinen gesamten Umfang in dichtendem Eingriff mit der ringförmigen Fläche (28) einer Endkappen-Sammelleitung (22) befindet.

3. Vorrichtung nach Anspruch 1 oder 2, dadurch gekennzeichnet, daß der Winkel, der von der ringförmigen Fläche (28) und der Mittelachse (29) des rohrförmigen Gehäuses (12) definiert wird, zwischen 15° und 50° beträgt.

4. Vorrichtung nach einem der Ansprüche 1 bis 3, dadurch gekennzeichnet, daß die ringförmigen Stirnflächen (26) des rohrförmigen Gehäuses (12) frei von nach innen vorstehenden Flanschen sind.

**Revendications**

1. Dispositif de séparation à fibres creuses comprenant:
— un boîtier ou corps tubulaire (12) définissant des surfaces d'extrémité annulaire (26) à chaque extrémité,
— des fibres creuses (20) s'étendant d'une extrémité à l'autre du corps (12),
— des bouchons d'extrémité (18) aux extrémités respectives du corps, pour sceller les fibres creuses (20) dans le corps (12), formés par remplissage des extrémités du corps avec un composé de matière plastique de scellement, de manière à communiquer une rigidité relative aux extrémités, le composé se terminant suivant une face plane dans le plan des extrémités du corps, et les passages intérieurs ouverts des fibres creuses traversant le composé, et

— des chapeaux collecteurs d'extrémité (22) qui se fixent sur les extrémités du corps (12), dans lequel

— le corps tubulaire est fabriqué en matière thermoplastique et

— chaque chapeau collecteur d'extrémité (22) définit une face annulaire intérieure (28) formant un angle sensiblement de 5° à 70° par rapport à l'axe central (29) du corps tubulaire (12), caractérisé en ce que:

le corps tubulaire (12) et les chapeaux collecteurs d'extrémité (22) sont tous fabriqués en matière thermoplastique,

— chaque surface d'extrémité annulaire (26) du corps (12) est placée en relation de butée et de jonction avec le face annulaire (28) d'un chapeau de collecteur d'extrémité (22), et

— le corps tubulaire (12) et les chapeaux collecteurs d'extrémité (22) sont liés l'un à l'autre par soudage thermique à l'endroit desdites surfaces d'extrémité annulaires (26) et des faces annulaires (28).

2. Dispositif suivant la revendication 1, dans lequel une collerette s'étendant vers l'extérieur (24) est définie aux extrémités dudit corps tubulaire (12), ladite collerette (24) étant en contact d'étanchéité sur toute sa périphérie avec la face annulaire (28) d'un chapeau d'extrémité (22).

3. Dispositif suivant la revendication 1 ou 2, caractérisé en ce que l'angle défini par ladite face annulaire (28) et l'axe central (29) du corps tubulaire (12) est compris entre 15° et 50°.

4. Dispositif suivant l'une quelconque des revendications 1 à 3, caractérisé en ce que les surfaces d'extrémité annulaires (26) du corps tubulaire (12) sont exemptes de collerettes en saillie vers l'intérieur.

FIG. 1

FIG. 2

0 130 994

FIG. 3

FIG. 4

2